# EUROPÄISCHE PATENTSCHRIFT

(11) **EP 3 711 990 B1**
(45) Veröffentlichungstag und Bekanntmachung des Hinweises auf die Patenterteilung: **22.03.2023**
(21) Anmeldenummer: 20159293.8
(22) Anmeldetag: 25.02.2020
(51) Int. Cl.: B60J 10/30, B60J 10/70

(54) **VERBINDUNGSELEMENT MIT ZWEI UNABHÄNGIGEN HALTEVORRICHTUNGEN**
CONNECTING ELEMENT WITH TWO INDEPENDENT HOLDING DEVICES
ÉLÉMENT DE LIAISON AVEC DEUX DISPOSITIFS DE MAINTIEN INDÉPENDANTS

(30) Priorität: 22.03.2019 LU 101158
(43) Veröffentlichungstag der Anmeldung: 23.09.2020
(73) Patentinhaber: Elkamet Kunststofftechnik GmbH, 35216 Biedenkopf (DE)
(72) Erfinder: Ortmüller, Michael, 35232 Dautphetal-Herzhausen (DE)

(56) Entgegenhaltungen:
- DE-A1- 3 821 457
- GB-A- 2 003 213
- US-A- 2 679 075
- US-A- 5 193 310
- US-A1- 2003 089 054

## Beschreibung

Die hier offenbarte Erfindung betrifft ein Verbindungselement zur Verbindung zweier Gegenstände, umfassend zwei unabhängig voneinander betätigbare Haltevorrichtungen, wobei zumindest eine Haltevorrichtung über miteinander verrastbare Schenkel verfügt.

Verbindungselemente sind generell in unterschiedlichen Bereichen der Technik bekannt.

So ist beispielsweise aus der WO 2016/139237 A1 (PCT/EP2016/054405) ein Möbelbeschlag zur Verbindung von Möbelteilen bekannt. Hier wird ein erstes Möbelstück über Bohrungen an einem ersten Beschlagteil und ein zweites Möbelstück an einem zweiten Beschlagteil befestigt. Dabei verfügt das erste Beschlagteil über zwei Achsen, die durch Zugfedern oder ein Federelement miteinander verbunden sind. Zum Verbinden der Möbelteile wird das zweite Beschlagteil mit einer dort vorhandenen Ausnehmung in eine der beiden Achsen eingeführt und dann über eine zweite Ausnehmung mit der zweiten Achse verrastet. Zum Lösen dieser Verbindung muss dann zunächst die Federkraft der Zugfedern überwunden werden. Nachteilig für eine Verwendung außerhalb der Möbelindustrie ist hier die Notwendigkeit der Befestigung der beiden Gegenstände an jeweils einem Schenkel des Verbindungselements und die vorgesehenen Zugfedern, die einer Ausführung in Kunststoff hinderlich sein könnten.

Die Schrift DE 10 2014 110 571 A1 offenbart Elemente zur Verbindung von einzelnen Lamellen einer teleskopischen Schutzabdeckung, wobei die Verbindungselemente zwischen den Lamellen angeordnet sind. Diese Verbindungselemente weisen einen einstückigen Aufbau auf, wobei zwei Schenkel über ein Filmscharnier miteinander verbunden sind und jeder der Schenkel eine Aufnahme für eine Lamelle aufweist. Weiterhin verfügt der erste Schenkel über einen Vorsprung, der in eine korrespondierende Vertiefung des zweiten Schenkels formschlüssig eingreifen kann.

Für eine anderweitige Verwendung nachteilig ist hier die Verbindung der zwei Lamellen über jeweils einen Schenkel. So sind die hier offenbarten Verbindungselemente zur Verbindung von Gegenständen mit einer größeren Höhe als Lamellen, die eine relative kleine Höhe aufweisen, ungeeignet.

Die Schrift EP 0 678 669 A1 offenbart Elemente zur Verbindung eines Anschlussstutzens einer Brennstoffeinspritzeinrichtung mit einem Einspritzventil. Dieses kreisförmige Verbindungselement verfügt über zwei mittels Materialdünnstelle verbundene Schenkel. An den der Materialdünnstelle gegenüberliegenden Enden der Schenkel ist eine Möglichkeit zur Verrastung der Schenkel vorhanden. Weiterhin sind dort zwei aus der Ebene des Grundkörpers herausragende Raststege vorgesehen. Funktional wird ein Ende eines Einspritzventils von dem kreisförmigen Verbindungselement umschlossen und die Schenkel an einem Ende verrastet. An demselben Ende erfolgt dann auch die rastende Verbindung mit der Brennstoffverteilereinrichtung.

Für anderweitige Anwendungen sind die hier offenbarten Verbindungselemente auf Grund ihrer Form und lediglich rastenden Verbindung zu einem zweiten Gegenstand nicht geeignet. So fehlt es an einem für anderen Formen des ersten Gegenstandes zugänglichen Aufnahmebereich und an einer hiervon unabhängigen Befestigungsmöglichkeit für einen zweiten Gegenstand.

Weiterhin sind Profilleisten zur Verbindung eines Randbereichs einer Windschutzscheibe eines Kraftfahrzeugs mit einem an die Windschutzscheibe angrenzenden Bauteil, wie etwa einer Wasserkastenabdeckung, bekannt.

So zeigt EP 3 103 665 A1 eine Profilleiste zur Anordnung zwischen einer Windschutzscheibe und einer Wasserkastenabdeckung. Die Wasserkastenabdeckung weist eine entsprechend dem Aufnahmebereich der Profilleiste geformte Rippe auf.

Dies wird auch in der Offenbarung der DE 20 2008 006 986 U1 deutlich. Insbesondere sind hier Hinterschneidungen und Ausformungen der Rippe für eine sichere Verrastung in der Profilleiste notwendig.

Die Schrift DE 3821457 A1 offenbart eine Klemmverbindung zur Verbindung einer Fahrzeugscheibe mit einem Karosserieflansch. Dabei wird ein über ein Scharnier verbundener Schenkel mit der Halterung verrastet, wodurch eine Klemmwirkung entsteht. Die Schrift US 2,679,075 A zeigt ebenfalls ein Verbindungselement zwischen einer Fahrzeugscheibe und einem Karosserieflansch. Auch dort wird ein zweischenkeliger Aufbau mit Verrastung zur klemmenden Verbindung mit dem Karosserieflansch benutzt.

Die Schrift GB 2 003 213 A offenbart ein Verbindungselement zwischen einer Rückscheibe eines Autos und der Karosserie, welches bei Bedarf auch verklebt werden kann.

Die Schrift US 5,193,310 A offenbart ein Verschlusssystem für Türen von Kühl- und Gefrierschränken. Dabei werden durch den Verschluss einzelne Teile des Türaufbaus miteinander verbunden. Auch dieses System umfasst einen über ein Scharnier verbundenen zweischenkeligen Aufbau mit einer Verrastung.

Die Schrift US 2003/0089054 A1 offenbart eine Halterung für Scheiben zur Befestigung an einer Fensteröffnung. Hier wird die jeweilige Scheibe durch einen Schenkel an die Halterung gepresst, wobei der Schenkel mit der Halterung verrastet. Zudem ist für die Scheibe eine Dichtung vorgesehen.

Für eine sichere und funktionsgerechte Verbindung von Profilleiste und Wasserkastenabdeckung müssen diese wie ein Schlüssel (Rippe der Wasserkastenabdeckung) zum Schloss (Profilleiste) passen.

Dies ist zugleich der Nachteil dieser Anordnung, da sich Änderungen oder Toleranzen der beiden Bauteile nachteilig auf ihre Montage auswirken.

Hiervon ausgehend, besteht die Aufgabe der Erfindung darin, ein Verbindungselement zur Verbindung zweier Gegenstände bereitzustellen, welches zur Befestigung eines zweiten Gegenstandes, unabhängig vom ersten Gegenstand, geeignet ist.

Diese Aufgabe wird von dem Verbindungselement mit den Merkmalen nach Anspruch 1 gelöst. Weitere optionale Merkmale sind in den abhängigen Ansprüchen genannt.

Das erfindungsgemäße Verbindungselement dient der Verbindung zweier Gegenstände mittels zweier Haltevorrichtungen. Die erste Haltevorrichtung wird durch zwei Schenkel gebildet, die über einen Scharnierbereich beweglich miteinander verbunden sind. Dies bedeutet, dass die Schenkel um eine durch den Scharnierbereich gebildete Schwenkachse relativ zueinander verschwenkbar miteinander verbunden sind.

Ein erster Schenkel der ersten Haltevorrichtung weist dabei einen ersten Teilabschnitt zur Bildung eines Aufnahmebereichs auf, der bei der Aufnahme eines Befestigungsabschnitts des ersten Gegenstandes mitwirkt. Dieser erste Teilabschnitt befindet sich an dem vom Scharnierbereich abgewandten Ende des ersten Schenkels. Weiterhin ist zwischen dem Scharnierbereich und dem ersten Teilabschnitt mindestens eine Rippe angeordnet.

Der Begriff "Befestigungsabschnitt" eines ersten oder zweiten Gegenstandes ist dahingehend zu verstehen, dass es sich lediglich um einen Teil eines ersten oder zweiten Gegenstandes handelt, der entsprechend der nachfolgenden Beschreibung geformt sein kann.

Ein zweiter Schenkel der ersten Haltevorrichtung weist einen zweiten Teilabschnitt zur Bildung des Aufnahmebereichs auf, der bei der Aufnahme des Befestigungsabschnitts des ersten Gegenstandes mitwirkt. Dieser zweite Teilabschnitt befindet sich an dem vom Scharnierbereich abgewandten Ende des zweiten Schenkels. Zwischen dem Scharnierbereich und dem zweiten Teilabschnitt ist mindestens eine Rastausnehmung vorhanden, in die die Rippe des ersten Schenkels eingreifen kann. Dieser Eingriff ist nicht notwendigerweise formschlüssig. Bevorzugt ist der Eingriff verrastend.

Beide Schenkel bilden im Bereich zwischen dem ersten und dem zweiten Teilabschnitt gemeinsam den Aufnahmebereich der ersten Haltevorrichtung zur Aufnahme des Befestigungsabschnitts des ersten Gegenstandes. Dieser Aufnahmebereich ist an dem dem Scharnierbereich abgewandten Ende der Schenkel angeordnet.

Dazu ist an zumindest einem der Teilabschnitte ein Vorsprung vorhanden, welcher in einer schräg, bevorzugt im Wesentlichen senkrecht, zu dem Teilabschnitt orientierten Richtung von dem Teilabschnitt abragt und einen Teil des Befestigungsabschnitts formschlüssig hintergreifen kann.

Entsprechend kann beispielsweise nur einer der beiden Schenkel der ersten Haltevorrichtung einen solchen Vorsprung in seinem Teilabschnitt aufweisen. Auch im Rahmen der Erfindung möglich sind jeweils ein oder mehrere Vorsprünge im Teilabschnitt eines Schenkels oder aber mindestens zwei Vorsprünge, jeweils in einem Teilabschnitt eines Schenkels. Dabei können sich die Vorsprünge der gegenüberliegenden Teilabschnitte entweder direkt gegenüberliegen oder aber versetzt zueinander angeordnet sein.

Auch können alle zuvor beschriebenen Vorsprünge gleiche oder unterschiedliche in Vorsprungsrichtung gemessene Längen aufweisen.

Alternativ oder zusätzlich kann zumindest einer der Teilabschnitte auch mindestens eine Vertiefung enthalten, welche von einem Teil des Befestigungsabschnitts bevorzugt kraftschlüssig und/oder formschlüssig hintergriffen werden kann.

Der Befestigungsabschnitt des ersten Gegenstandes weist entsprechend mindestens eine Vertiefung oder Formung auf, welche den mindestens einen Vorsprung des ersten und/oder zweiten Teilabschnitts hintergreifen kann. Weiterhin ist mindestens ein Teil des Befestigungsabschnitts zusätzlich oder alternativ derart geformt, dass er in die mindestens eine Vertiefung des ersten und/oder zweiten Teilabschnitts zumindest kraftschlüssig oder formschlüssig eingreifen kann. Optimal ist hier eine Vertiefung des Befestigungsabschnitts bzw. der den Aufnahmebereich bildenden Teilabschnitte, die ein vollständiges Hintergreifen der an einem oder an beiden Teilabschnitten der Schenkel oder am Befestigungsabschnitt vorhandenen einen oder mehrere Vorsprünge erlaubt. Jedoch sind für eine effektive Verbindung des ersten Gegenstandes mit dem Verbindungselement ein Vorsprung an einem Teilabschnitt eines Schenkels und ein entsprechend geformter Befestigungsabschnitt, der ein Hintergreifen des Vorsprunges erlaubt, ausreichend.

Hierdurch erfolgt eine zumindest kraftschlüssige, optional auch formschlüssige, Verbindung zwischen dem Aufnahmebereich der ersten Haltevorrichtung des Verbindungselements und dem Befestigungsabschnitt des ersten Gegenstands, wenn die Rippe des ersten Schenkels insbesondere verrastend in die Rastausnehmung des zweiten Schenkels eingegriffen hat. Dies ist auch in umgekehrter Form gültig, wobei die Vertiefung in einem oder beiden Teilabschnitten liegt und der Befestigungsbereich entsprechend einen oder mehrere Vorsprünge aufweist.

Gemäß der Erfindung weist die Rastausnehmung des zweiten Schenkels, die sich zwischen dem Scharnierbereich und dem zweiten Teilabschnitt befindet, mindestens ein zusätzliches Rastelement auf, welches in die Rastausnehmung hineinragt. Dieses mindestens eine Rastelement ist mit der Rippe des ersten Schenkels kraft- und/oder formschlüssig in Eingriff bringbar.

Eine derartige Anordnung mit einer Rippe und einer ein Rastelement umfassenden Rastausnehmung ist in DE 20 2008 006 986 U1 gezeigt.

In einer Rastausnehmung können ein oder zwei oder mehrere dieser Rastelemente der zuvor beschriebenen Art vorhanden sein.

In einer weiteren bevorzugten Ausführungsform weisen einer der Schenkel der ersten Haltevorrichtung des Verbindungselements und der erste Gegenstand Außenseiten auf, die im miteinander verbundenen Zustand zueinander im Wesentlichen bündig angeordnet sind. Weiterhin kann auch der zweite Gegenstand eine Außenseite aufweisen, die ihrerseits im Wesentlichen bündig zu den Außenseiten eines Schenkels der ersten Haltevorrichtung und des ersten Gegenstandes angeordnet ist, wenn der zweite Gegenstand über das Verbindungselement mit dem ersten Gegenstand verbunden ist. Die Außenseite des Schenkels der ersten Haltevorrichtung des Verbindungselements kann zusätzlich eine Dichtlippe aufweisen, welche aus dem gleichen Material wie der Schenkel oder aus einem anderen Material bestehen kann. Ebenso kann auch eine Dichtlippe an einem der Schenkel der zweiten Haltevorrichtung vorgesehen sein.

In einer weiteren Ausführungsform enthält das Verbindungselement in einem der Schenkel oder in beiden Schenkeln Verstärkungseinlagen. Diese Verstärkungseinlagen können sich beispielsweise vom ersten Teilabschnitt des ersten Schenkels bis zu der Rippe oder bis in die Rippe erstrecken. Auch ist es möglich, dass zusätzlich oder alternativ eine Verstärkungseinlage in dem zweiten Teilabschnitt vorhanden ist. Auch kann eine solche Verstärkungseinlage sich vom ersten oder zweiten Schenkel der ersten Haltevorrichtung in die zweite Haltevorrichtung erstrecken. Die Verstärkungseinlage dient dazu, das Verbindungselement zusätzlich hoch belastbar und dauerhaft stabil zu machen.

Die Wahl des Materials der Verstärkungseinlage ist von der Verwendung des Verbindungsabschnittes und von den zu verbindenden Gegenständen abhängig und ist in das Belieben des Fachmannes gestellt. Bevorzugt ist jedoch eine Verstärkungseinlage aus Metall, wie Aluminium oder Stahl. Weiterhin bevorzugt ist eine Verstärkungseinlage aus Kunststoff, wobei der Kunststoff steifer ist als das Material der restlichen Komponenten des Verbindungselements.

Eine weitere bevorzugte Ausführungsform der Erfindung besteht darin, dass die Schenkel im Scharnierbereich stoffschlüssig miteinander verbunden sind. Der Scharnierbereich kann dann beispielsweise als Filmscharnier oder als Materialdünnstelle ausgebildet sein. Entsprechend können beide Schenkel separat gefertigt werden und mittels dem Fachmann bekannter Verfahren im Scharnierbereich stoffschlüssig zusammengefügt werden. Alternativ können beide Schenkel oder auch das gesamte Verbindungselement einstückig ausgeführt sein.

Die erste Haltevorrichtung eines erfindungsgemäßen Verbindungselements weist zwei Funktionskonfigurationen oder Funktionsstellungen auf.

Die erste Funktionskonfiguration ist dadurch gekennzeichnet, dass die Rippe des ersten Schenkels nicht in die Rastausnehmung des zweiten Schenkels eingreift. Der eine Schenkel kann dann um die Schwenkachse im Scharnierbereich relativ von dem anderen Schenkel wegbewegt werden. Dadurch erfährt der Aufnahmebereich, der von den Teilabschnitten des ersten und des zweiten Schenkels gebildet wird, eine räumliche Vergrößerung. Damit ist es möglich, den Befestigungsabschnitt des ersten Gegenstandes im Rahmen einer Montage in den Aufnahmebereich einzuführen oder umgekehrt den Befestigungsabschnitt im Rahmen einer Demontage aus dem Aufnahmebereich zu entfernen.

Durch eine Bewegung der beiden Schenkel aufeinander zu verkleinert sich der Aufnahmebereich, und es kommt zum Hintergreifen eines Teils des Befestigungsabschnitts durch den mindestens einen Vorsprung des Aufnahmebereichs. Alternativ kommt es zum Eingreifen eines Teils des Befestigungsabschnitts in die optionale mindestens eine Vertiefung eines der Schenkel der ersten Haltevorrichtung.

Eine zweite Funktionskonfiguration des Verbindungselements ist dann erreicht, wenn die Rippe des ersten Schenkels insbesondere verrastend in die Rastausnehmung des zweiten Schenkels eingreift. Zudem hintergreift dann der mindestens eine Vorsprung des ersten und/oder zweiten Teilabschnitts im Aufnahmebereich einen Teil des Befestigungsabschnitts, oder alternativ bzw. zusätzlich hintergreift dann der mindestens eine Vorsprung des Befestigungsabschnitts einen Teil des ersten und/oder zweiten Teilabschnitts. Dadurch wird ein Entfernen des Befestigungsabschnitts des ersten Gegenstandes aus dem Aufnahmebereich der ersten Haltevorrichtung des Verbindungselements in der zweiten Funktionskonfiguration des Verbindungselements verhindert. Die erste Funktionsstellung kann als "offen" und die zweite Funktionsstellung als "geschlossen" bezeichnet werden.

Weiterhin können der erste und der zweite Schenkel magnetische Einlagen aufweisen, die bei der zweiten, geschlossenen Funktionskonfiguration auf Grund der gegenseitigen Anziehungskräfte die Verschlusswirkung verstärken.

In einer weiteren Ausführungsform befindet sich am ersten Teilbereich des ersten Schenkels und/oder am zweiten Teilbereich des zweiten Schenkels ein Abdichtelement. Das Abdichtelement liegt optional an dem Befestigungsabschnitt des ersten Gegenstands an, wenn dieser mit dem Verbindungselement verbunden ist, und dient der Abdichtung zwischen dem Verbindungselement und dem ersten Gegenstand. Ein solches Abdichtelement sollte in der zweiten Funktionskonfiguration des Verbindungselements mindestens eine Abdichtwirkung von 50%, optional mindestens 70%, bevorzugt mindestens 80%, besonders bevorzugt mindestens 90% und ganz besonders bevorzugt 100%, ermittelt durch ein Vergleich der Flüssigkeitspassage mit und ohne flüssigkeitsabdichtende Vorrichtung, gewährleisten. Ein derartiges Abdichtelement kann die Form eines Steges haben, welcher sich ausgehend von einem der Teilbereiche in den Aufnahmeraum hinein erstreckt. Alternativ kann auch mindestens eine bewegliche Lasche im ersten oder zweiten Teilbereich vorgesehen sein, welche zumindest in der zweiten Funktionskonfiguration an dem Befestigungsabschnitt anliegt. Weiterhin kann auch ein Teil des Aufnahmeraums mit einer flüssigkeitsdichten Masse versehen sein.

Weiterhin verfügt das erfindungsgemäße Verbindungselement über eine zweite Haltevorrichtung zur Verbindung mit einem zweiten Gegenstand. Die zweite Haltevorrichtung befindet sich an einer von der ersten Haltevorrichtung abgewandten Seite des Verbindungselements. Die zweite Haltevorrichtung kann prinzipiell an einem der Schenkel der ersten Vorrichtung oder benachbart zu dem Scharnierbereich angeordnet sein.

In einer bevorzugten Ausführungsform ist die zweite Haltevorrichtung auf einer der ersten Haltevorrichtung abgewandten Seite des Scharnierbereichs der ersten Haltevorrichtung angeordnet. Weiterhin bevorzugt ist die zweite Haltevorrichtung auf einer der ersten Haltevorrichtung gegenüberliegenden Seite des Scharnierbereichs der ersten Haltevorrichtung angeordnet.

Je nach Gestaltung der zweiten Haltevorrichtung kann einer der beiden Schenkel der ersten Haltevorrichtung über den Scharnierbereich der ersten Haltevorrichtung in Richtung des zu verbindenden zweiten Gegenstandes hinaus verlängert sein und damit in die zweite Haltevorrichtung übergehen.

Die zweite Haltevorrichtung ist funktional unabhängig von der ersten Haltevorrichtung, wie dies bei den folgenden Ausführungsformen beispielhaft erläutert und gezeigt wird.

Die zweite Haltevorrichtung kann in einer nicht erfindungsgemäßen Ausführungsform ein Halteelement umfassen. Bevorzugte Haltelemente sind ein Stoffschlussabschnitt zur stoffschlüssigen Verbindung der zweiten Haltevorrichtung mit dem zweiten Gegenstand, ein Klebeabschnitt, etwa in Form eines doppelseitigen Klebebands, zur Verklebung mit dem zweiten Gegenstand, ein Übergangsbereich, in dem das Verbindungselement stoffschlüssig oder einstückig mit dem zweiten Gegenstand verbunden ist, oder Widerhaken, die in entsprechende Ausnehmungen des zweiten Gegenstandes eingreifen können, Löcher zur Verbindung des zweiten Gegenstandes mit dem Verbindungselement mittels einer oder mehrerer Schrauben oder Nägel oder dergleichen.

Bei einer solchen nicht erfindungsgemäßen Ausführungsform mittels Haltelement bedeutet funktionale Unabhängigkeit der ersten und zweiten Haltevorrichtung, dass der zweite Gegenstand unabhängig von der ersten Haltevorrichtung und ihrer Funktionskonfiguration mittels des Halteelements mit der zweiten Haltevorrichtung verbindbar ist.

Die zweite Haltevorrichtung ist in einer erfindungsgemäßen Ausführungsform entsprechend der ersten Haltevorrichtung gemäß einer der zuvor beschriebenen Ausführungsformen ausgeführt. Dabei kann in einem individualisierten Verbindungselement die zweite Haltevorrichtung identisch mit oder im hier dargestellten Rahmen verschieden von der ersten Haltevorrichtung ausgeführt sein. Weiterhin kann sich zwischen der ersten und der zweiten Haltevorrichtung ein Materialabschnitt befinden. Länge, Form und Material des Materialabschnitts sind dabei in das Belieben des Fachmannes gestellt und von dem jeweiligen Einsatz des Verbindungselements abhängig.

Bei einer solchen erfindungsgemäßen Ausführungsform bedeutet funktionale Unabhängigkeit der ersten und zweiten Haltevorrichtung, dass der zweite Gegenstand unabhängig von dem ersten Gegenstand mit dem erfindungsgemäßen Verbindungselement verbunden werden kann. Bei einer der ersten Haltevorrichtung vergleichbaren Gestaltung der zweiten Haltevorrichtung bedeutet dies, dass die zweite Haltevorrichtung unabhängig von der ersten Haltevorrichtung in die erste beziehungsweise zweite Funktionskonfiguration gebracht werden kann. Die erste und die zweite Haltevorrichtung können daher unabhängig voneinander "geöffnet" und "geschlossen" werden.

In einer nicht erfindungsgemäßen Ausführungsform ist das Verbindungselement integraler Bestandteil des zweiten Gegenstandes. Dies heißt, dass eine insgesamt stoffschlüssige Verbindung zwischen dem zweiten Gegenstand und dem Verbindungselement besteht.

Das erfindungsgemäße Verbindungselement kann strangförmig hergestellt sein.

Eine Wasserkastenabdeckung kann den ersten Gegenstand darstellen. Ihr Befestigungsabschnitt kann weniger filigran ausgeführt werden als im Fall der Verwendung der bisher bekannten Profilleisten. Zudem können auch bei konstruktiven Abweichungen des Befestigungsabschnitts der Wasserkastenabdeckung dieselben Profilleisten ohne Funktionseinbußen bei der Montage der Wasserkastenabdeckung verwendet werden.

Im Stand der Technik bilden die Rippe der Wasserkastenabdeckung und die Rastausnehmung der Profilleiste zueinander ein Schlüssel-Schloss Prinzip. Bei der vorliegenden Erfindung wird dieses Schlüssel-Schloss Prinzip in das erfindungsgemäße Verbindungselement verlagert. Dadurch lässt sich auch bei größeren Toleranzen im Bereich des Befestigungsabschnitts der Wasserkastenabdeckung einerseits sowie im Aufnahmebereich der Profilleiste andererseits eine gute Verbaubarkeit und eine sichere Verbindung zwischen diesen Bauteilen erzielen.

Bei einer Profilleiste zur Verbindung einer Windschutzscheibe mit einer Wasserkastenabdeckung, wobei die Wasserkastenabdeckung den ersten Gegenstand darstellt, sind alle oben aufgeführten Ausführungsformen möglich und einbezogen.

Auch ist eine Anordnung umfassend eine Windschutzscheibe, ein Verbindungselement entsprechend den obigen Ausführungsformen und optional eine Wasserkastenabdeckung von der vorliegenden Erfindung umfasst.

Bei der Verwendung eines Verbindungselements als Profilleiste kann zusätzlich an der Außenseite des Schenkels der ersten Haltevorrichtung eine Dichtlippe vorgesehen sein, welche im verbauten Zustand bevorzugt im Wesentlichen bündig zu der Außenseite der Windschutzscheibe und der Außenseite der Wasserkastenabdeckung angeordnet ist. Dies gilt ebenso bei einer Anordnung umfassend eine Windschutzscheibe, ein Verbindungselement und eine Wasserkastenabdeckung.

Das erfindungsgemäße Verbindungselement, etwa in Form einer Profilleiste, kann aus einem Kunststoffmaterial, beispielsweise aus Poly(vinylchlorid) (PVC), aus einem Blend aus Poly(vinylchlorid) und Poly(acrylnitril-butadien-styrol) (PVC/ABS) oder aus Poly(propylen) (PP) hergestellt sein. Die Auswahl geeigneter Kunststoffe oder Kunststoff-Mischungen bleibt dem Fachmann überlassen.

Hergestellt werden kann das erfindungsgemäße Verbindungselement auf unterschiedliche Art und Weise. Bevorzugt ist die Herstellung insbesondere eines erfindungsgemäßen Verbindungselements in Form einer Profilleiste mittels Extrusion oder Co-Extrusion. Andere Verfahren zur Kunststoffherstellung und Verarbeitung sind jedoch ebenfalls möglich.

Weiterhin wird eine nicht erfindungsgemäße Anordnung offenbart, umfassend eine erste Haltevorrichtung, eine zweite Haltevorrichtung und einen sich zwischen der ersten und zweiten Haltevorrichtung erstreckenden Materialabschnitt zum Umfassen eines Gegenstandes. Die erste Haltevorrichtung ist dabei wie zuvor beschrieben geformt. Die zweite Haltevorrichtung jedoch ist derart ausgebildet, dass sie die Form des zuvor beschriebenen Befestigungsabschnitts des ersten Gegenstandes aufweist. Mithin wird die als Befestigungsabschnitt ausgeformte zweite Haltevorrichtung in den Aufnahmebereich der ersten Haltevorrichtung eingeführt und dort gehalten.

Der Materialabschnitt zwischen der ersten und zweiten Haltevorrichtung kann aus einem oder mehreren Materialien bestehen, deren Auswahl in das Belieben des jeweiligen Fachmannes gestellt ist. Bevorzugt ist ein Materialabschnitt aus Kunststoff oder Metall. Zudem kann die erste Haltevorrichtung Verstärkungseinlagen aus dem zuvor beschriebenen Material enthalten.

Die hier vorgestellte Anordnung weist in einer Ausführungsform eine Form auf, die es ihr ermöglicht, einen Gegenstand zu umfassen. So kann die Anordnung einen Gegenstand im Wesentlichen in Querschnittsrichtung umfassen.

Optional umfasst diese Anordnung eine weitere Haltevorrichtung, welche geformt ist wie die erste Haltevorrichtung. Diese weitere Haltevorrichtung ist derart in den Materialabschnitt integriert, dass sie den Befestigungsabschnitt eines zweiten Gegenstandes in ihrem durch die Schenkel gebildeten Aufnahmebereich aufnehmen kann. Diese weitere Haltevorrichtung ist zudem beabstandet von der ersten und zweiten Haltevorrichtung, beispielsweise diesen gegenüberliegend in dem Materialabschnitt angeordnet.

Weitere Merkmale und Vorteile der Erfindung sind Gegenstand der nachfolgenden Beschreibung und der zeichnerischen Darstellung bevorzugter Ausführungsbeispiele.

Die Figuren 1A bis 2B und 4A bis 6B, sowie die dazugehörige Figurenbeschreibung sind nicht erfindungsgemäß und dienen lediglich der Veranschaulichung.

Die Zeichnungen zeigen in
- Figur 1A: Querschnitt eines Verbindungselements mit einer ersten Haltevorrichtung mit Rastelement in einer ersten Funktionskonfiguration ("offen")
- Figur 1B: perspektivische Ansicht des Verbindungselements nach Figur 1A
- Figur 1C: Querschnitt eines Verbindungselements mit einer ersten Haltevorrichtung mit Rastelement in einer zweiten Funktionskonfiguration ("geschlossen")
- Figur 1D: perspektivische Ansicht des Verbindungselements nach Figur 1C
- Figur 2A: Querschnitt eines Verbindungselements mit einer ersten Haltevorrichtung in einer ersten Funktionskonfiguration ("offen")
- Figur 2B: Querschnitt eines Verbindungselements mit einer ersten Haltevorrichtung in einer zweiten Funktionskonfiguration ("geschlossen")
- Figur 3A: Querschnitt eines Verbindungselements mit zwei gleich gestalteten Haltevorrichtungen, jeweils mit Rastelement, mit einer Haltevorrichtung in einer zweiten Funktionskonfiguration ("geschlossen") und einer Haltevorrichtung in einer ersten Funktionskonfiguration ("offen")
- Figur 3B: Querschnitt eines Verbindungselements mit zwei gleich gestalteten Haltevorrichtungen, jeweils mit Rastelement und in einer zweiten Funktionskonfiguration ("geschlossen")
- Figur 3C: Querschnitt eines Verbindungselements mit zwei gleich gestalteten Haltevorrichtungen, die sich in einer Ebene befinden, jeweils mit Rastelement und in einer ersten Funktionskonfiguration ("offen")
- Figur 3D: Querschnitt eines Verbindungselements mit zwei gleich gestalteten Haltevorrichtungen, die sich in einer Ebene befinden, jeweils mit Rastelement und in einer zweiten Funktionskonfiguration ("geschlossen")
- Figur 4A: Querschnitt durch ein Verbindungselement in Form einer Profilleiste mit einer ersten Haltevorrichtung in einer ersten Funktionskonfiguration ("offen")
- Figur 4B: Querschnitt durch ein Verbindungselement in Form einer Profilleiste mit einer ersten Haltevorrichtung in einer zweiten Funktionskonfiguration ("geschlossen")
- Figur 5A: Querschnitt eines Verbindungselements mit einer ersten Haltevorrichtung mit Rastelement und Abdichtelement in einer ersten Funktionskonfiguration ("offen")
- Figur 5B: Querschnitt eines Verbindungselements mit einer ersten Haltevorrichtung mit Rastelement und Abdichtelement in einer zweiten Funktionskonfiguration ("geschlossen")
- Figur 6A: Querschnitt durch eine Anordnung mittels eines Materialabschnittes verbundener Haltevorrichtungen in Funktionskonfiguration eins ("offen")
- Figur 6B: Querschnitt durch eine Anordnung mittels eines Materialabschnittes verbundener Haltevorrichtungen in Funktionskonfiguration zwei ("geschlossen")

Im Folgenden werden einige Ausführungsbeispiele anhand der Abbildungen erläutert.

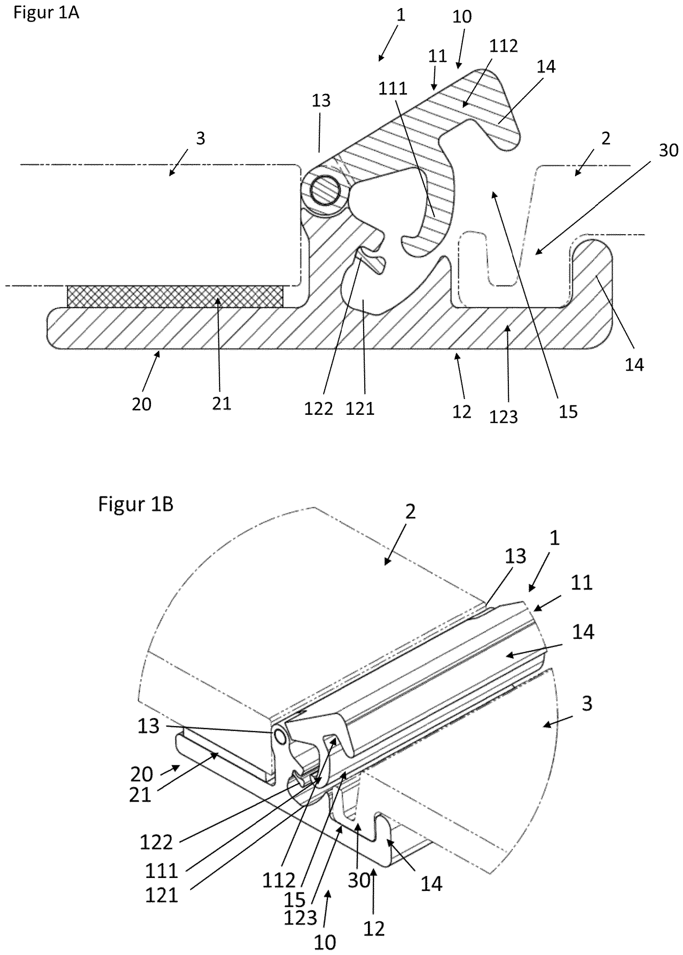

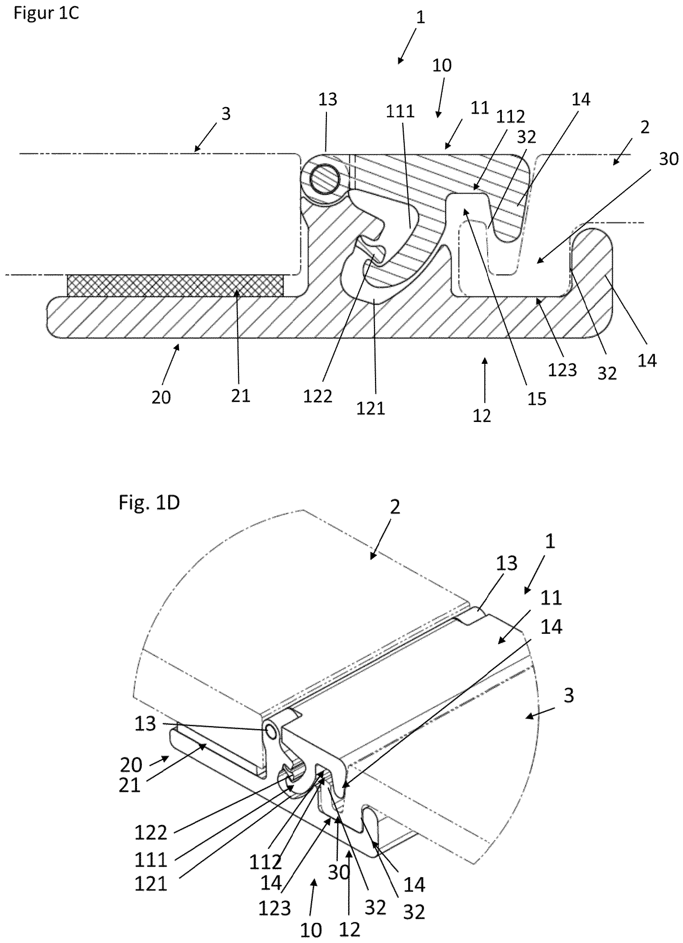

Die Figuren 1A bis 1D zeigen ein nicht erfindungsgemäßes Verbindungselement (1) zur Verbindung eines ersten und eines zweiten Gegenstandes (2, 3) im Querschnitt (Figur 1A, Figur 1C) sowie in jeweils einer perspektivischen Ansicht (Figur 1B, Figur 1D).

Das Verbindungselement (1) umfasst eine erste Haltevorrichtung (10). Diese umfasst einen ersten und einen zweiten Schenkel (11, 12), die über einen Scharnierbereich (13) beweglich miteinander verbunden sind. Der erste Schenkel (11) umfasst an seinem von dem Scharnierbereich (13) abgewandten Ende einen ersten Teilabschnitt (112) zur Bildung des Aufnahmebereichs (15), wobei der erste Teilabschnitt (112) in diesem Beispiel einen Vorsprung (14) umfasst. Zwischen dem ersten Teilabschnitt (112) und dem Scharnierbereich (13) weist der erste Schenkel (11) eine Rippe (111) auf. Der zweite Schenkel (12) umfasst an seinem von dem Scharnierbereich (13) abgewandten Ende einen zweiten Teilabschnitt (123) zur Bildung eines Aufnahmebereichs (15), wobei der zweite Teilabschnitt (123) hier einen Vorsprung (14) aufweist. Zwischen dem Scharnierbereich (13) und dem zweiten Teilabschnitt (123) weist der zweite Schenkel (12) eine Rastausnehmung (121) auf, die in diesem Beispiel zusätzlich über ein Rastelement (122) verfügt, welches in die Rastausnehmung (121) hineinragt. In den Figuren 1A und 1B ist die erste Haltevorrichtung (10) in einer ersten Funktionskonfiguration gezeigt, bei der die Rippe (111) nicht in die Rastausnehmung (121) eingreift.

Die Figuren 1C und 1D zeigen dasselbe Verbindungselement (1), wobei die erste Haltevorrichtung (10) in einer zweiten Funktionskonfiguration dargestellt ist, bei der das Rastelement (122) kraft- und formschlüssig in die Rippe (111) des ersten Schenkels (11) eingreift.

In den Figuren 1A und 1B liegt der gestrichelt dargestellte Befestigungsabschnitt (30) des ersten Gegenstands (2) in der ersten Haltevorrichtung (10), welche sich in ihrer ersten (geöffneten) Funktionskonfiguration befindet. Der Befestigungsabschnitt (30) ist daher nicht in der Haltevorrichtung (10) festgelegt, sondern kann aus dem Aufnahmebereich (15) der Haltevorrichtung (10) entfernt oder in diesen eingeführt werden.

In den Figuren 1C und 1D befindet sich die Haltevorrichtung (10) in ihrer zweiten (geschlossenen) Funktionskonfiguration. Der gestrichelt dargestellte Befestigungsabschnitt (30) des ersten Gegenstandes (2) ist im Aufnahmebereich (15) der Haltevorrichtung zwischen dem ersten und dem zweiten Teilabschnitt (112, 123) festgelegt. Hierbei hintergreifen (Hintergriff (32)) die Vorsprünge (14) der Schenkel (11, 12) einen Teil des Befestigungsabschnittes (30) formschlüssig.

Weiterhin umfasst das Verbindungselement (1) eine zweite Haltevorrichtung (20), die hier ein Halteelement (21) zur Verbindung mit einem zweiten Gegenstand (3) umfasst.

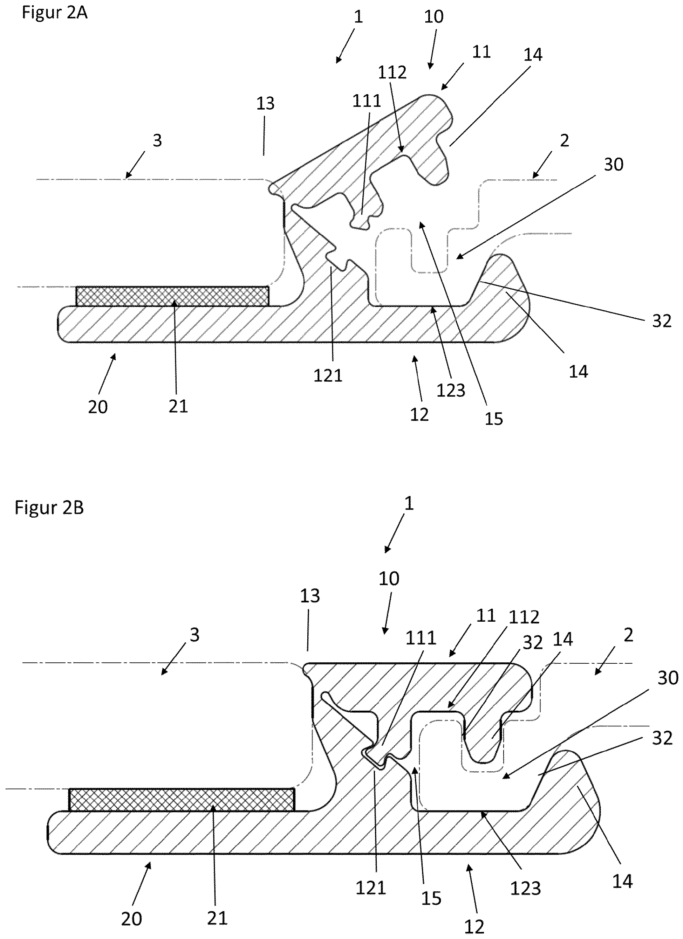

Die Figuren 2A und 2B zeigen ein nicht erfindungsgemäßes Verbindungselement (1) mit den bereits unter Bezug auf die Figuren 1A und 1B erläuterten Merkmalen. Die erste Haltevorrichtung (10) befindet sich in Figur 2A in der ersten Funktionskonfiguration und in Figur 2B in der zweiten Funktionskonfiguration. Der Scharnierbereich (13) ist in dieser Ausführungsform als Filmscharnier ausgeführt.

Zudem ist in der Rastausnehmung (121) kein Rastelement vorhanden. Dafür ist hier die Rippe (111) des ersten Schenkels (11) derart geformt, dass sie in die Rastausnehmung (121) verrastend eingreifen kann, wie in Figur 2B gezeigt.

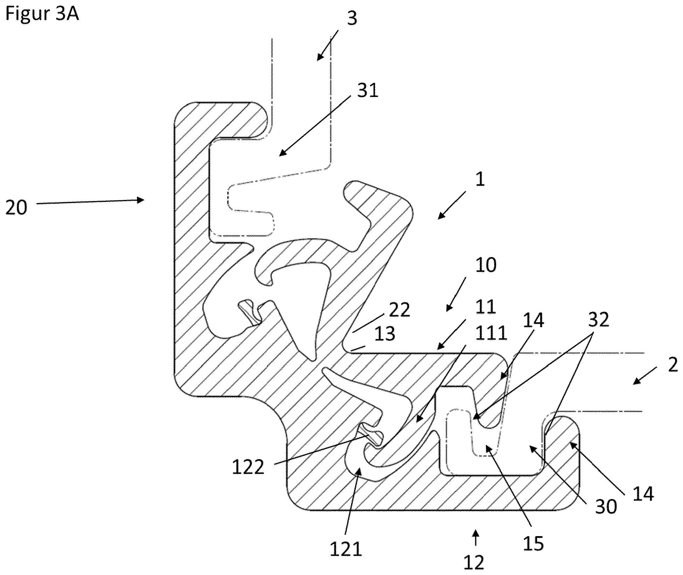

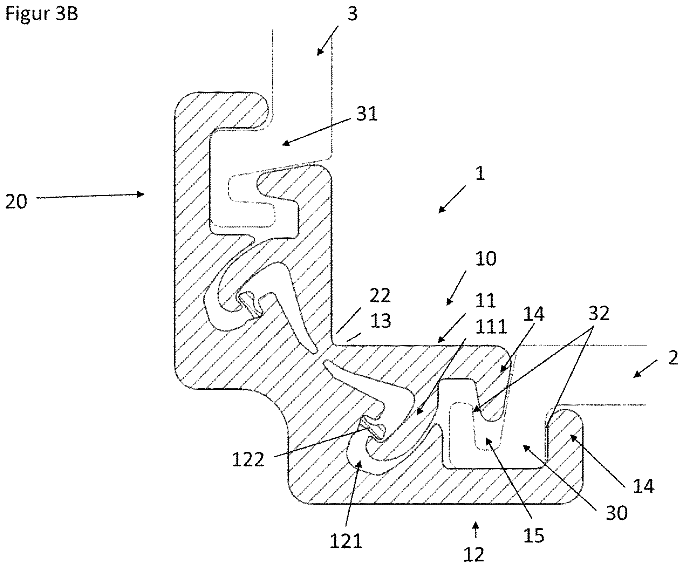

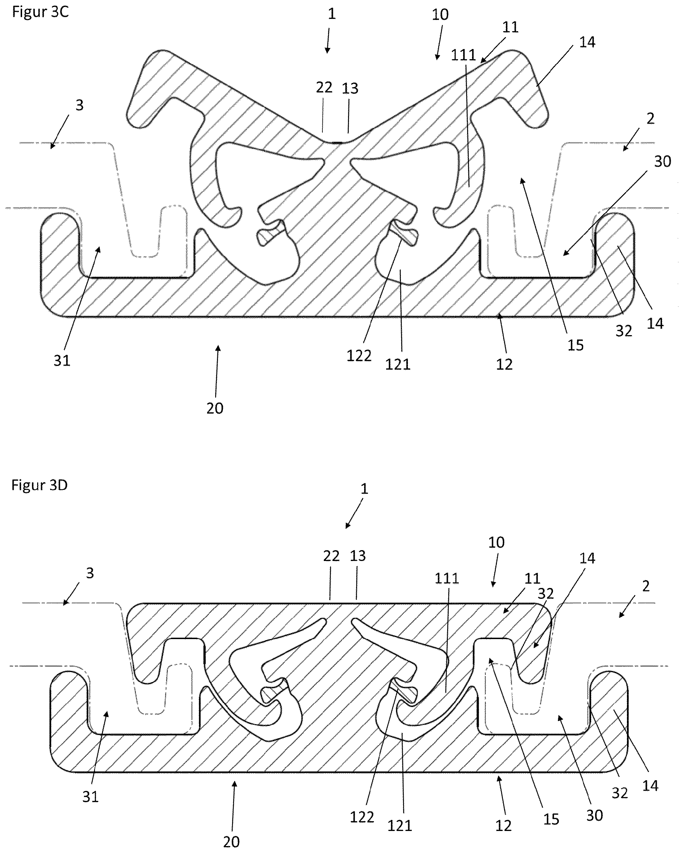

Die Figuren 3A, 3B und 3C, 3D zeigen unterschiedliche erfindungsgemäße Verbindungselemente (1) mit zwei zueinander angeordneten Haltevorrichtungen (10, 20), wobei beide Haltevorrichtungen (10, 20) der jeweiligen Verbindungselemente (1) jeweils gleich ausgeführt sind. Soweit nachfolgend nicht separat aufgeführt, weisen die Verbindungselemente die oben bereits unter Bezug auf die Figuren 1A und 1C erläuterten Merkmale auf.

In Figur 3A ist ein Verbindungselement (1) gezeigt, bei welchem die erste Haltevorrichtung (10) einen Scharnierbereich (13) in Form eines Filmscharniers aufweist und im Übrigen wie die erste Haltevorrichtung gemäß Figur 1A ausgestaltet ist. Die zweite Haltevorrichtung (20) ist wie die erste Haltevorrichtung (10) ausgeführt und verfügt ebenso über einen eigenen Scharnierbereich (22). Beide Haltevorrichtungen (10, 20) sind in einem Winkel von 90° in den Scharnierbereichen (13, 22) miteinander verbunden. Dadurch können ein erster und ein zweiter Gegenstand (2, 3) miteinander verbunden werden, die über entsprechend gestaltete Befestigungsabschnitte (30, 31) verfügen. Die erste Haltevorrichtung (10) ist in der zweiten Funktionskonfiguration ("geschlossen") und die zweite Haltevorrichtung (20) in der ersten Funktionskonfiguration (offen) gezeigt. Aus dieser Figur ist ersichtlich, dass sich die erste und die zweite Haltevorrichtung (10, 20) unabhängig voneinander in einer ersten oder zweiten Funktionskonfiguration befinden können und somit funktional voneinander unabhängig sind. Dies ist hier gezeigt, trifft jedoch auf alle Ausführungsformen zu.

In Figur 3B ist das Verbindungselement (1) der Figur 3A gezeigt, wobei hier beide Haltevorrichtungen (10, 20) in ihrer zweiten Funktionskonfiguration (geschlossen) dargestellt sind.

Weiterhin möglich ist ein Verbindungselement (1), bei dem die erste und die zweite Haltevorrichtung (10, 20) gleich gestaltet sind und sich auf einer Ebene befinden, wie in den Figuren 3C und 3D gezeigt. Beide Haltevorrichtungen (10, 20) weisen jeweils einen Scharnierbereich (13, 22) in Form eines Filmscharniers auf und entsprechen im Übrigen der ersten Haltevorrichtung (10) der Figur 1A bzw. 1C. Die Figur 3C zeigt ein entsprechendes Verbindungselement (1) mit beiden Haltevorrichtungen (10, 20) in der ersten (geöffneten) Funktionskonfiguration, Figur 3D ein solches mit beiden Haltevorrichtungen (10, 20) in der zweiten (geschlossenen) Funktionskonfiguration.

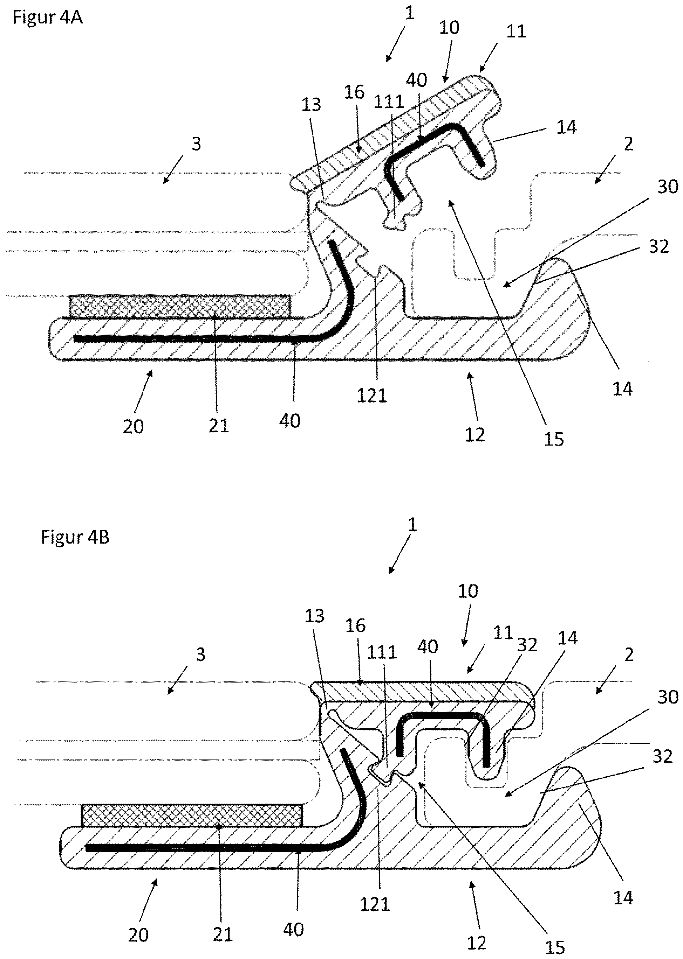

Die Figuren 4A und 4B zeigen ein nicht erfindungsgemäßes Verbindungselement (1) in Form einer Profilleiste mit der ersten Haltevorrichtung (10) in der ersten Funktionskonfiguration (Figur 4A) und in der zweiten Funktionskonfiguration (Figur 4B). Dabei stellt der erste Gegenstand (2) eine Wasserkastenabdeckung und der zweite Gegenstand (3) eine Windschutzscheibe dar. Das hier gezeigte Verbindungselement (1) weist zusätzlich eine an dem ersten Schenkel (11) angeordnete Dichtlippe (16) auf. Weiterhin verfügt das hier gezeigte Verbindungselement (1) über Verstärkungseinlagen (40) im ersten Schenkel (11) und in der zweiten Haltevorrichtung (20). Die weiteren Merkmale entsprechen denen der Figuren 2A und 2B. Optional können Rastausnehmung (121) und Rippe (111) wie in den Figuren 1A bis 1D dargestellt ausgeführt sein.

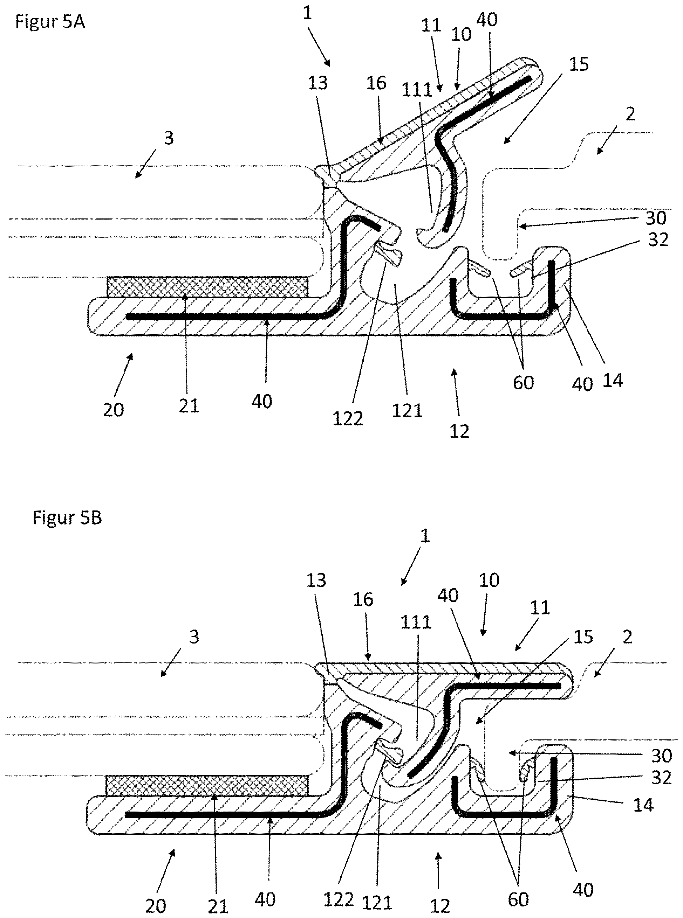

Die Figuren 5A und 5B zeigen ein nicht erfindungsgemäßes Verbindungselement (1) mit einem Abdichtelement (60) in der ersten Funktionskonfiguration (Figur 5A) und in der zweiten Funktionskonfiguration (Figur 5B). Das Verbindungselement (1) enthält die Merkmale der Figuren 1A und 1C. Zusätzlich sind hier beispielhaft eine Dichtlippe (16) sowie Verstärkungseinlagen (40) vorgesehen. Weiterhin befinden sich am zweiten Schenkel (12) der ersten Haltevorrichtung (10) zwei Abdichtelemente (60), die unabhängig von der Dichtlippe (16) und den Verstärkungseinlagen (40) sind. In der zweiten (geschlossenen) Funktionskonfiguration in Figur 5B wird der Befestigungsabschnitt (30) des ersten Gegenstandes (2) zwischen den beiden Abdichtelementen (60) aufgenommen. Optional können Rastausnehmung (121) und Rippe (111) wie in den Figuren 2A und 2B dargestellt ausgeführt sein.

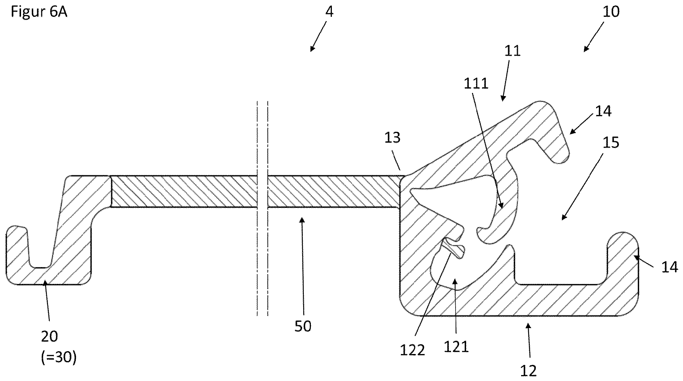

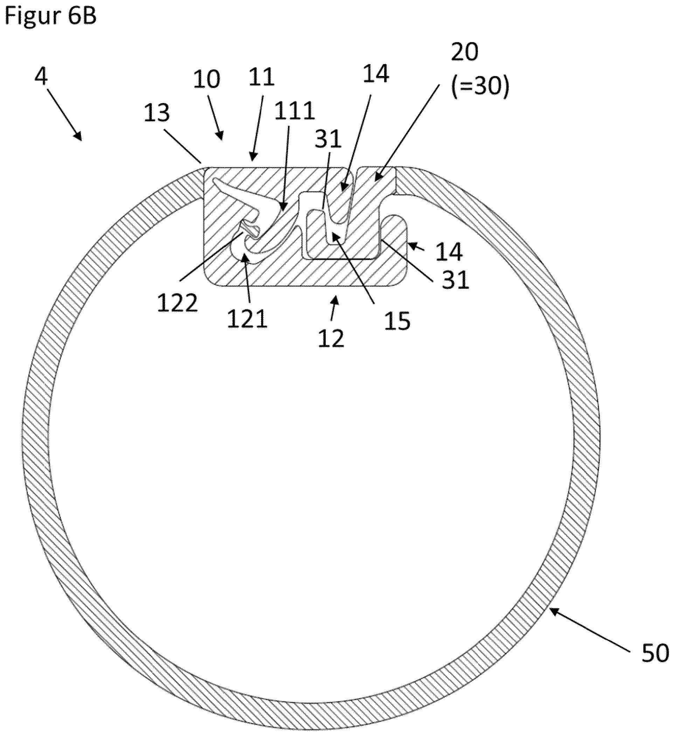

Die Figuren 6A und 6B zeigen eine nicht erfindungsgemäße Anordnung (4) aus einer ersten und einer zweiten Haltevorrichtung (10, 20) mit einem dazwischen befindlichen Materialabschnitt (50). Die Figur 6A zeigt diese Anordnung (4) mit der ersten Haltevorrichtung (10) in der ersten Funktionskonfiguration. Diese erste Haltevorrichtung (10) ist so gestaltet, wie sie beispielhaft in der Figur 1A gezeigt ist. Die zweite Haltevorrichtung (20) ist mit der ersten Haltevorrichtung (10) über einen Materialabschnitt (50) verbunden. Die zweite Haltevorrichtung (20) weist hier eine Form auf, die als Befestigungsabschnitt (30) zur Aufnahme in dem Aufnahmebereich (15) der ersten Haltevorrichtung (10) ausgeführt ist.

Die Figur 6B zeigt die Anordnung (4) mit der ersten Haltevorrichtung (10) in der zweiten Funktionskonfiguration. Die als Befestigungsabschnitt (30) gestaltete zweite Haltevorrichtung (20) ist hier in dem Aufnahmebereich (15) zwischen dem ersten und zweiten Schenkel (11, 12) der ersten Haltevorrichtung (10) festgelegt. Die Haltevorrichtungen (10, 20) sind hier durch einen Materialabschnitt (50) miteinander verbunden. Dadurch weist in diesem Beispiel diese Anordnung (4) einen kreisförmigen Querschnitt auf und kann beispielsweise ein Rohr umfassen.

In den Figuren wurden folgende Bezugszeichen verwendet:
- 1: Verbindungselement
- 2: erster Gegenstand
- 3: zweiter Gegenstand
- 4: Anordnung
- 10: erste Haltevorrichtung
- 11: erster Schenkel
- 111: Rippe
- 112: erster Teilabschnitt
- 12: zweiter Schenkel
- 121: Rastausnehmung
- 122: Rastelement
- 123: zweiter Teilabschnitt
- 13: Scharnierbereich der ersten Haltevorrichtung
- 14: Vorsprung
- 15: Aufnahmebereich
- 16: Dichtlippe
- 20: zweite Haltevorrichtung
- 21: Halteelement
- 22: Scharnierbereich der zweiten Haltevorrichtung
- 30: Befestigungsabschnitt des ersten Gegenstandes
- 31: Befestigungsabschnitt des zweiten Gegenstandes
- 32: Hintergriff
- 40: Verstärkungseinlage(n)
- 50: Materialabschnitt
- 60: Abdichtelement

## Patentansprüche

1. Verbindungselement (1) zur Verbindung zweier Gegenstände (2, 3), umfassend eine erste Haltevorrichtung (10) zur Verbindung mit einem ersten Gegenstand (2), umfassend zwei über einen Scharnierbereich (13) beweglich miteinander verbundene Schenkel (11, 12), wobei der erste Schenkel (11) im Bereich seines dem Scharnierbereich (13) abgewandten Endes einen ersten Teilabschnitt (112) zur Bildung eines Aufnahmebereichs (15) sowie mindestens eine zwischen dem Scharnierbereich (13) und dem ersten Teilabschnitt (112) angeordnete Rippe (111) aufweist, und wobei der zweite Schenkel (12) im Bereich seines dem Scharnierbereich (13) abgewandten Endes einen zweiten Teilabschnitt (123) zur Bildung des Aufnahmebereichs (15) sowie mindestens eine zwischen dem Scharnierbereich (13) und dem zweiten Teilabschnitt (123) angeordnete Rastausnehmung (121) zum insbesondere verrastenden Eingriff der Rippe (111) des ersten Schenkels (11) aufweist, wobei der zweite Schenkel (12) zusätzlich mindestens ein Rastelement (122) aufweist, welches in die Rastausnehmung (121) hineinragt und mit der Rippe (111) des ersten Schenkels (11) kraft- und/oder formschlüssig in Eingriff bringbar ist, wobei die Schenkel (11, 12) im Bereich zwischen dem ersten Teilabschnitt (112) und dem zweiten Teilabschnitt (123) den Aufnahmebereich (15) für einen Befestigungsabschnitt (30) des ersten Gegenstands (2) bilden, wobei an zumindest einem Schenkel (11, 12) mindestens ein Vorsprung (14) vorhanden ist, der einen Teil des Befestigungsabschnittes (30) formschlüssig hintergreifen kann, und/oder wobei an zumindest einem Schenkel (11, 12) zumindest eine Vertiefung vorhanden ist, die von einem Teil des Befestigungsabschnittes (30) hintergriffen werden kann, und eine zweite Haltevorrichtung (20) zur Verbindung mit einem zweiten Gegenstand (3), welche an einer von der ersten Haltevorrichtung (10) abgewandten Seite des Verbindungselements (1) angeordnet und funktional unabhängig von der ersten Haltevorrichtung (10) ist, wobei die zweite Haltevorrichtung (20) ausgebildet ist wie die erste Haltevorrichtung (10) und wobei sich optional zwischen der ersten und der zweiten Haltevorrichtung (10, 20) ein Materialabschnitt (50) befindet, **dadurch gekennzeichnet, dass** das Rastelement unterhalb eines in die Rastausnehmung (121) hineinragenden Vorsprungs angeordnet ist und über die Ausdehnung des Vorsprungs in die Rastausnehmung (121) hinaus in die Rastausnehmung (121) hineinragt.

2. Verbindungselement nach Anspruch 1, **dadurch gekennzeichnet, dass** die erste Haltevorrichtung (10) eine erste Funktionskonfiguration aufweist, in welcher die Rippe (111) des ersten Schenkels (11) nicht in die Rastausnehmung (121) des zweiten Schenkels (12) eingreift, und eine zweite Funktionskonfiguration aufweist, in welcher die Rippe (111) des ersten Schenkels (11) in die Rastausnehmung (121) des zweiten Schenkels (12) insbesondere verrastend eingreift.

3. Verbindungselement nach einem der vorherigen Ansprüche, **dadurch gekennzeichnet, dass** zumindest einer der Schenkel (11, 12) eine Außenseite aufweist, welche im mit dem ersten Gegenstand (2) verbundenen Zustand im Wesentlichen bündig mit einer Außenseite des ersten Gegenstandes (2) angeordnet ist.

4. Verbindungselement nach Anspruch 3, **dadurch gekennzeichnet, dass** zumindest einer der Schenkel (11, 12) eine Außenseite aufweist, welche im mit dem zweiten Gegenstand (3) verbundenen Zustand im Wesentlichen bündig mit einer Außenseite des zweiten Gegenstandes (3) angeordnet ist.

5. Verbindungselement nach einem der vorherigen Ansprüche, **dadurch gekennzeichnet, dass** in dem ersten und/oder in dem zweiten Schenkel (11, 12) und/oder in der zweiten Haltevorrichtung (20) mindestens eine Verstärkungseinlage (40) vorhanden ist.

6. Verbindungselement nach einem der vorherigen Ansprüche, **dadurch gekennzeichnet, dass** die Schenkel (11, 12) im Scharnierbereich (13) stoffschlüssig miteinander verbunden sind.

7. Verbindungselement nach Anspruch 6, **dadurch gekennzeichnet, dass** der Scharnierbereich (13) als Materialdünnstelle oder Filmscharnier ausgebildet ist.

8. Verbindungselement nach einem der vorherigen Ansprüche, wobei der erste und der zweite Schenkel (11, 12) der ersten Haltevorrichtung (10) magnetische Einlagen aufweisen, welche sich gegenseitig anziehen.

9. Verbindungselement nach einem der vorherigen Ansprüche, **dadurch gekennzeichnet, dass** sich an einem ersten Teilbereich des ersten Schenkels (11) und/oder an einem zweiten Teilbereich des zweiten Schenkel (12) mindestens ein Abdichtelement (60) befindet, das in den Aufnahmeraum (15) gerichtet ist und optional im mit dem ersten Gegenstand (2) verbundenen Zustand an dem Befestigungsabschnitt (30) anliegt.

## Claims

1. Connecting element (1) for connecting two objects (2, 3), comprising a first holding device (10) for connecting to a first object (2), comprising two limbs (11, 12) which are movably connected to one another by way of a hinge region (13), wherein the first limb (11) in the region of the end thereof that faces away from the hinge region (13) has a first sub-portion (112) for forming a receptacle region (15) as well as at least one rib (111), which is disposed between the hinge region (13) and the first sub-portion (112), and wherein the second limb (12) in the region of the end thereof that faces away from the hinge region (13) has a second sub-portion (123) for forming the receptacle region (15) as well as at least one latching recess (121), which is disposed between the hinge region (13) and the second sub-portion (123), for engaging in particular in a latching manner the rib (111) of the first limb (11), wherein the second limb (12) additionally has at least one latching element (122) which protrudes into the latching recess (121) and is able to be brought to engage in a force-fitting and/or form-fitting manner with the rib (111) of the first limb (11), wherein the limbs (11, 12) in the region between the first sub-portion (112) and the second sub-portion (123) form the receptacle region (15) for a fastening portion (30) of the first object (2), wherein at least one protrusion (14) which can engage in a form-fitting manner behind part of the fastening portion (30) is present on at least one limb (11, 12), and/or wherein at least one depression which can be engaged from behind by part of the fastening portion (30) is present on at least one limb (11, 12), and a second holding device (20) for connecting to a second object (3) which is disposed on a side of the connecting element (1) that faces away from the first holding device (10) and is functionally independent of the first holding device (10), wherein the second holding device (20) is configured like the first holding device (10), and wherein a material portion (50)is optionally located between the first and the second holding device (10, 20), **characterized in that** the latching element is disposed below a protrusion that protrudes into the latching recess (121) and extends into the latching recess (121) beyond the extent of the protrusion into the latching recess (121).

2. Connecting element according to Claim 1, **characterized in that** the first holding device (10) has a first functional configuration in which the rib (111) of the first limb (11) does not engage in the latching recess (121) of the second limb (12), and a second functional configuration in which the rib (111) of the first limb (11) engages, in particular in a latching manner, in the latching recess (121) of the second limb (12) .

3. Connecting element according to one of the preceding claims, **characterized in that** at least one of the limbs (11, 12) has an external side which, in the state connected to the first object (2), is disposed so as to be substantially flush with an external side of the first object (2).

4. Connecting element according to Claim 3, **characterized in that** at least one of the limbs (11, 12) has an external side which, in the state connected to the second object (3), is disposed so as to be substantially flush with an external side of the second object (3).

5. Connecting element according to one of the preceding claims, **characterized in that** at least one reinforcement insert (40) is present in the first and/or in the second limb (11, 12) and/or in the second holding device (20).

6. Connecting element according to one of the preceding claims, **characterized in that** the limbs (11, 12) in the hinge region (13) are connected to one another in a materially integral manner.

7. Connecting element according to Claim 6, **characterized in that** the hinge region (13) is configured as a material thin area or an integral hinge.

8. Connecting element according to one of the preceding claims, wherein the first and the second limb (11, 12) of the first holding device (10) have magnetic inserts which attract one another.

9. Connecting element according to one of the preceding claims, **characterized in that** at least one sealing element (60) which is directed into the receptacle space (15) and optionally, in the state connected to the first object (2), bears on the fastening portion (30) is located on a first sub-region of the first limb (11) and/or on a second sub-region of the second limb (12).

## Revendications

1. Élément de liaison (1) pour relier deux objets (2, 3), comprenant un premier dispositif de retenue (10) pour la liaison à un premier objet (2), comprenant deux branches (11, 12) reliées entre elles de manière mobile par l'intermédiaire d'une zone de charnière (13), la première branche (11) présentant dans la zone de son extrémité détournée de la zone de charnière (13) une première section partielle (112) pour former une zone de réception (15) ainsi qu'au moins une nervure (111) agencée entre la zone de charnière (13) et la première section partielle (112), et la deuxième branche (12) présentant dans la zone de son extrémité détournée de la zone de charnière (13) une deuxième section partielle (123) pour former la zone de réception (15) ainsi qu'au moins un évidement d'encliquetage (121) agencé entre la zone de charnière (13) et la deuxième section partielle (123) pour l'engagement, notamment par encliquetage, de la nervure (111) de la première branche (11), la deuxième branche (12) présentant en outre au moins un élément d'encliquetage (122) qui pénètre dans l'évidement d'encliquetage (121) et qui peut être amené en prise par adhérence et/ou par complémentarité de forme avec la nervure (111) de la première branche (11), les branches (11, 12) formant dans la zone entre la première section partielle (112) et la deuxième section partielle (123) la zone de réception (15) pour une section de fixation (30) du premier objet (2), au moins une saillie (14) étant présente sur au moins une branche (11, 12), qui peut s'engager derrière une partie de la section de fixation (30) par complémentarité de forme, et/ou au moins un creux étant présent sur au moins une branche (11, 12), qui peut être engagé par derrière par une partie de la section de fixation (30), et un deuxième dispositif de retenue (20) pour la liaison à un deuxième objet (3), qui est agencé sur un côté de l'élément de liaison (1) détourné du premier dispositif de retenue (10) et qui est fonctionnellement indépendant du premier dispositif de retenue (10), le deuxième dispositif de retenue (20) étant configuré comme le premier dispositif de retenue (10) et une section de matériau (50) se trouvant éventuellement entre le premier et le deuxième dispositif de retenue (10, 20), **caractérisé en ce que** l'élément d'encliquetage est agencé en dessous d'une saillie pénétrant dans l'évidement d'encliquetage (121) et pénètre dans l'évidement d'encliquetage (121) au-delà de l'extension de la saillie dans l'évidement d'encliquetage (121) .

2. Élément de liaison selon la revendication 1, **caractérisé en ce que** le premier dispositif de retenue (10) présente une première configuration fonctionnelle dans laquelle la nervure (111) de la première branche (11) ne s'engage pas dans l'évidement d'encliquetage (121) de la deuxième branche (12), et présente une deuxième configuration fonctionnelle dans laquelle la nervure (111) de la première branche (11) s'engage dans l'évidement d'encliquetage (121) de la deuxième branche (12), notamment par encliquetage.

3. Élément de liaison selon l'une quelconque des revendications précédentes, **caractérisé en ce qu'**au moins l'une des branches (11, 12) présente un côté extérieur qui, à l'état relié au premier objet (2), est agencé essentiellement en affleurement avec un côté extérieur du premier objet (2).

4. Élément de liaison selon la revendication 3, **caractérisé en ce qu'**au moins l'une des branches (11, 12) présente un côté extérieur qui, à l'état relié au deuxième objet (3), est agencée essentiellement en affleurement avec un côté extérieur du deuxième objet (3) .

5. Élément de liaison selon l'une quelconque des revendications précédentes, **caractérisé en ce qu'**au moins un insert de renforcement (40) est présent dans la première et/ou dans la deuxième branche (11, 12) et/ou dans le deuxième dispositif de retenue (20).

6. Élément de liaison selon l'une quelconque des revendications précédentes, **caractérisé en ce que** les branches (11, 12) sont reliées entre elles par liaison de matière dans la zone de charnière (13).

7. Élément de liaison selon la revendication 6, **caractérisé en ce que** la zone de charnière (13) est configurée sous forme d'emplacement de matière mince ou de charnière à film.

8. Élément de liaison selon l'une quelconque des revendications précédentes, dans lequel la première et la deuxième branche (11, 12) du premier dispositif de retenue (10) présentent des inserts magnétiques qui s'attirent mutuellement.

9. Élément de liaison selon l'une quelconque des revendications précédentes, **caractérisé en ce que** sur une première zone partielle de la première branche (11) et/ou sur une deuxième zone partielle de la deuxième branche (12) se trouve au moins un élément d'étanchéité (60) qui est dirigé dans l'espace de réception (15) et qui s'applique éventuellement sur la section de fixation (30) à l'état relié au premier objet (2).
